# EUROPEAN PATENT APPLICATION

(11) **EP 2 634 677 A2**
(43) Date of publication of application: **04.09.2013**
(21) Application number: 12175084.8
(22) Date of filing: 05.07.2012
(51) Int. Cl.: G06F 3/044

(54) **Touch display device**

(30) Priority: 01.03.2012 CN 201210052065
(71) Applicant: HannStar Display Corp., Wugu Dist. New Taipei City 248 (TW)
(72) Inventor: Yu, Chia-Hua, 220 New Taipei City (TW); Wu, Hsu-Ho, 700 Tainan City (TW); Liu, Hsuan-Chen, 802 Kaohsiung City (TW)
(74) Representative: Becker Kurig Straus

(57) **Abstract**

A touch display device including a display panel, a shielding electrode layer, a touch panel, a conductive element and a flexible circuit board is provided. The shielding electrode layer covers a top surface of the display panel. The touch panel disposed on the shielding electrode layer includes a substrate, a touch control element, a ground electrode and a metal wire. The touch control element includes a sensing electrode, a transmission wire and two pads. The transmission wire is electrically connected to the sensing electrode and one pad. The meal wire is connected between the ground electrode and the other pad. The shielding electrode layer is electrically connected to the metal wire or the ground electrode of the touch panel through the conductive element. The flexible circuit board is electrically connected to the pads, so that the sensing electrode and the metal wire are electrically connected to the flexible circuit board.

## Description

### BACKGROUND OF THE INVENTION

### Field of the Invention

The invention relates to a display device. Particularly, the invention relates to a touch display device.

### Description of Related Art

A phenomenon of electrostatic discharge can be seen everywhere in the daily living environments. Since the electron has different affinities for various objects, when any two objects are separated after contacting, it is easy to produce a phenomenon of charge transfer between the objects, which results in accumulation of static electricity. Once the static electricity in the object is accumulated to a certain degree, when the object carrying the static electricity contacts or approaches to another object with a different potential, the phenomenon of transient charge transfer is occurred, which is the so-called electrostatic discharge.

Taking a display panel as an example, there is a high possibility that the display panel is subjected to electrostatic discharge damage during a process of fabrication, production, assembly, transportation and even a use process after purchase. For example, when a user touches or wipes a surface of the display panel by a finger, it is easy to cause surface electrostatic charge residues to indirectly produce an electric field, which may influence arrangement of internal display media to cause a mura phenomenon. Moreover, when the components of the display panel suffer a transient high voltage electrostatic discharge, the internal circuit thereof is liable to be permanently damaged, which leads to component failure.

Moreover, with increasing progresses of display technology, in recent years, various electronic produces are developed towards a trend of simple operation, small size and large screen size. Especially, the portable electronic products have more strict requirements in volume and screen size. Therefore, in many electronic products, a touch panel is integrated with a display panel to save a space required by a keyboard or control buttons, so that a configuration area of the screen can be enlarged. However, since the display panel itself is a signal generation source, when a high voltage is applied to a data line of the display panel, the data line is probably coupled to a sensing pad in the touch panel, which may severely interfere a sensing signal received by the sensing pad, and lead to a poor sensing capability of the touch panel. Therefore, it is an important issue to effectively resolve the problem of static electricity on the touch panel and the display panel and between the touch panel and the display panel.

### SUMMARY OF THE INVENTION

The invention is directed to a touch display device, which is adapted to conduct static electricity on a display panel and a touch panel to ground.

To achieve the aforementioned advantage, the invention provides a touch display device including a display panel, a shielding electrode layer, a touch panel, a conductive element and a flexible circuit board. The display panel has a top surface. The shielding electrode layer is disposed on the display panel, and covers the top surface. The touch panel is disposed on the shielding electrode layer, and has a sensing region and a peripheral region surrounding the sensing region. The touch panel includes a substrate, a touch control element, at least one ground electrode and at least one metal wire. The touch control element is disposed on the substrate, and the touch control element includes at least one sensing electrode, at least one transmission wire and at least two pads. The sensing electrode is located in the sensing region, and the transmission wire and the pads are located in the peripheral region, and the transmission wire is located between the sensing electrode and one of the pads, and is electrically connected to the sensing electrode and one of the pads. The ground electrode is disposed in the peripheral region of the substrate. The meal wire is disposed in the peripheral region of the substrate, where the metal wire is connected between the ground electrode and another one of the pads. The conductive element is disposed between the shielding electrode layer and the touch panel, where the shielding electrode layer is electrically connected to the metal wire or the ground electrode of the touch panel through the conductive element. The flexible circuit board is disposed on the touch panel, and is located in the peripheral region, where the flexible circuit board is electrically connected to the pads, so that the sensing electrode and the metal wire are electrically connected to the flexible circuit board.

In an embodiment of the invention, the at least one ground electrode includes a first ground electrode and a second ground electrode. The at least one metal wire includes a first metal wire and a second metal wire. The at least two pads include a first pad, a second pad and at least one third pad located between the first pad and the second pad. The first metal wire is electrically connected to the first ground electrode and the first pad, and the second metal wire is electrically connected to the second ground electrode and the second pad. The transmission wire is connected to the third pad.

In an embodiment of the invention, the ground electrode is a ring-shape ground electrode, which surrounds the sensing region and has a first end and a second end opposite to each other. The at least one metal wire includes a first metal wire and a second metal wire. The at least two pads include a first pad, a second pad and at least one third pad located between the first pad and the second pad. The first metal wire is electrically connected to the first end of the ring-shape ground electrode and the first pad, and the second metal wire is electrically connected to the second end of the ring-shape ground electrode and the second pad. The transmission wire is connected to the third pad.

In an embodiment of the invention, the at least one ground electrode includes a first type ring-shape ground electrode and a second type ring-shape ground electrode. The first type ring-shape ground electrode and the second type ring-shape ground electrode surround the sensing region, and the first type ring-shape ground electrode has a first end and a second end opposite to each other, and the second type ring-shape ground electrode has a third end and a fourth end opposite to each other. The at least one metal wire includes a first metal wire and a second metal wire. The at least two pads include a first pad, a second pad and at least one third pad located between the first pad and the second pad. The first metal wire is electrically connected to the first end of the first type ring-shape ground electrode and the first pad, and the second metal wire is electrically connected to the third end of the second type ring-shape ground electrode and the second pad. The second end of the first type ring-shape ground electrode is adjacent to the fourth end of the second type ring-shape ground electrode. The transmission wire is connected to the third pad.

In an embodiment of the invention, the at least one ground electrode includes a first ground electrode and a second ground electrode. The at least one metal wire includes a first metal wire, a second metal wire and a third metal wire. The at least two pads include a first pad, a second pad and at least one third pad located between the first pad and the second pad. The first metal wire is electrically connected to the first ground electrode and the first pad, and the second metal wire is electrically connected to the second ground electrode and the second pad. The third metal wire is electrically connected to the first ground electrode and the second ground electrode and surrounds the sensing region. The transmission wire is connected to the third pad.

In an embodiment of the invention, the at least one sensing electrode includes a plurality of first sensing series and a plurality of second sensing series. Each of the first sensing series extends along a first direction and includes a plurality of first sensing electrode pads and a plurality of first bridge electrodes electrically connecting the first sensing electrode pads. Each of the second sensing series extends along a second direction and includes a plurality of second sensing electrode pads and a plurality of second bridge electrodes electrically connecting the second sensing electrode pads. Each of the second bridge electrodes is insulated from the corresponding first bridge electrode through an insulation layer. The first direction is intersected with the second direction, and the first sensing series and the second sensing series are intersected with each other. The at least one transmission wire includes a plurality of transmission wires, which are disposed at peripheral of the first sensing series and the second sensing series. Each of the transmission wires is connected to one of the first sensing series and the second sensing series.

In an embodiment of the invention, the first sensing electrode pads, the second sensing electrode pads and the ground electrode belong to a same film layer, and the second bridge electrodes, the transmission wires and the metal wire belong to a same film layer.

In an embodiment of the invention, the touch display device further includes an adhesive glue disposed between the touch panel and the shielding electrode layer, where the touch panel is fixed on the display panel through the adhesive glue.

In an embodiment of the invention, the display panel includes a transmissive display panel, a trans-reflective display panel, a reflective display panel, a vertical alignment (VA) display panel, an in plane switch (IPS) display panel, a multi-domain vertical alignment (MVA) display panel, a twist nematic (TN) display panel, a fringe field switching (FFS) display panel or an organic light-emitting diode (OLED) display panel.

In an embodiment of the invention, the touch panel includes a capacitive touch panel, an acoustic wave touch panel, an infrared touch panel or an optical touch panel.

According to the above descriptions, the shielding electrode layer is disposed between the touch panel and the display panel, which may mitigate signal interference between the touch panel and the display panel. Moreover, the shielding electrode layer can transmit the static electricity between the touch panel and the display panel to the ground electrode or the metal wire of the touch panel through the conductive element, and the metal wire transmits the static electricity generated between the touch panel and the display panel to the ground through the electrical connection between the pad and the ground terminal of the flexible circuit board. In this way, not only sensing capability of the touch display device is effectively improved, but also the static electricity is effectively discharged to protect the electronic components inside the touch display device.

In order to make the aforementioned and other features and advantages of the invention comprehensible, several exemplary embodiments accompanied with figures are described in detail below.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.

FIG. 1 is a cross-sectional view of a touch display device according to an embodiment of the invention.

FIG. 2A is a bottom view of a touch panel and a flexible circuit board of FIG. 1.

FIG. 2B is a partial enlarged bottom view of a touch control element of the touch panel of FIG. 2A according to another embodiment.

FIG. 2C is a cross-sectional view of FIG. 2B along a line I-I.

FIG. 3 is a bottom view of a touch panel and a flexible circuit board of FIG. 1 according to another embodiment.

FIG. 4 is a bottom view of a touch panel and a flexible circuit board of FIG. 1 according to still another embodiment.

FIG. 5 is a bottom view of a touch panel and a flexible circuit board of FIG. 1 according to yet another embodiment.

FIG. 6 is a bottom view of a touch panel and a flexible circuit board of FIG. 1 according to still another embodiment.

### DETAILED DESCRIPTION OF DISCLOSED EMBODIMENTS

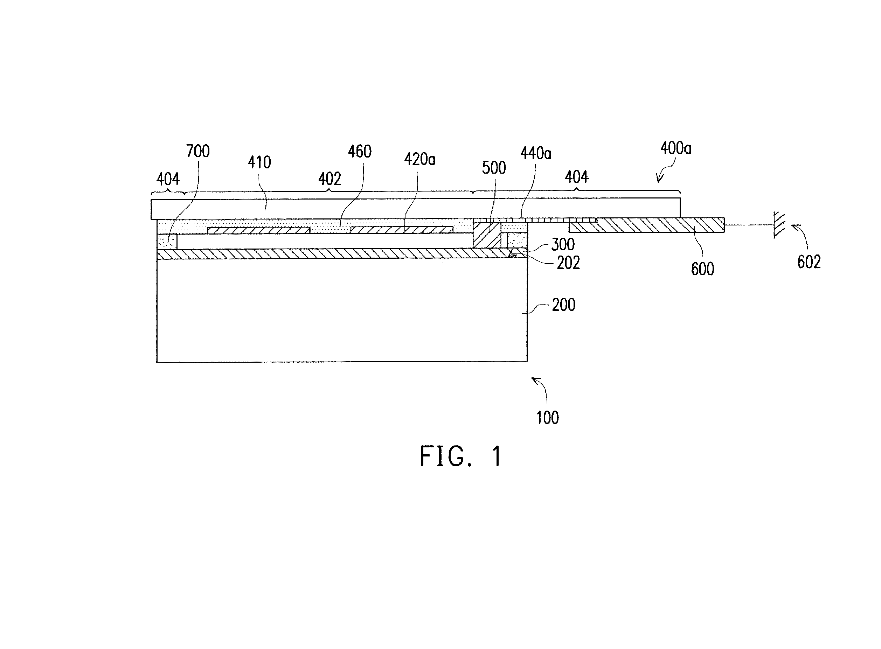

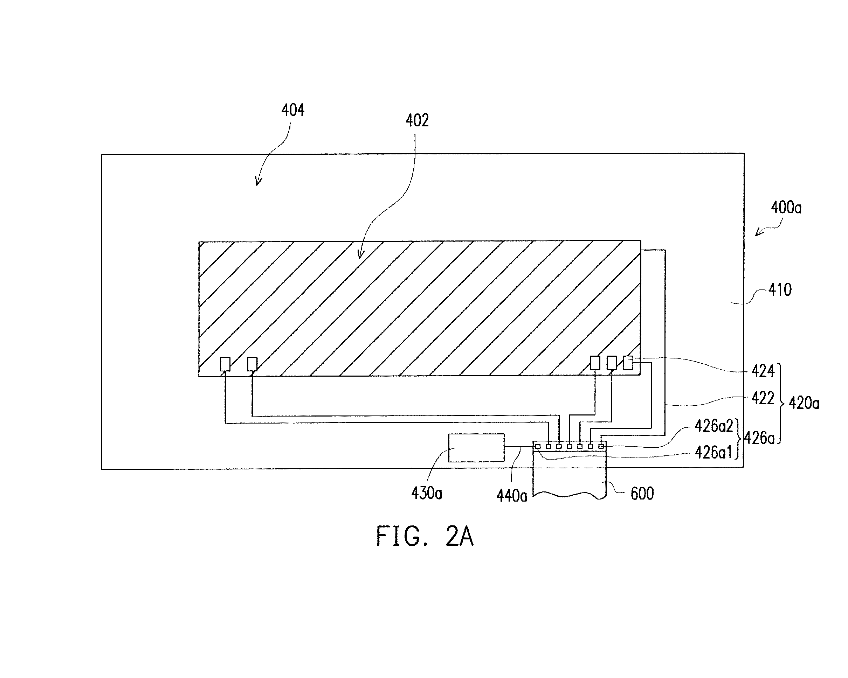

FIG. 1 is a cross-sectional view of a touch display device according to an embodiment of the invention. FIG. 2A is a bottom view of a touch panel and a flexible circuit board of FIG. 1. Referring to FIG. 1 and FIG. 2A, in the present embodiment, the touch display device 100 includes a display panel 200, a shielding electrode layer 300, a touch panel 400a, a conductive element 500 and a flexible circuit board 600.

In detail, the display panel 200 has a top surface 202. The display panel 200 is, for example, a transmissive display panel, a trans-reflective display panel, a reflective display panel, a vertical alignment (VA) display panel, an in plane switch (IPS) display panel, a multi-domain vertical alignment (MVA) display panel, a twist nematic (TN) display panel, a fringe field switching (FFS) display panel or an organic light-emitting diode (OLED) display panel, which is not limited by the invention.

The shielding electrode layer 300 is disposed on the display panel 200, and covers the top surface 202 of the display panel 200, where a material of the shielding electrode layer 300 is, for example, a transparent conductive material, for example, indium tin oxide (ITO) or indium zinc oxide (IZO).

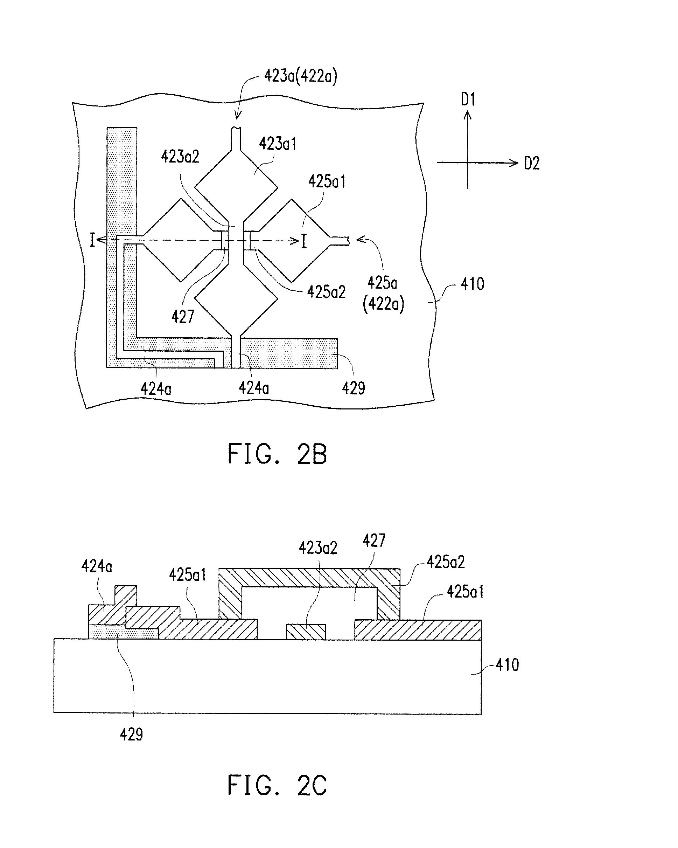

Referring to FIG. 2, the touch panel 400a is disposed on the shielding electrode layer 300, and has a sensing region 402 and a peripheral region 404 surrounding the sensing region 402. When a user operates the touch panel 400a, the user may directly press or touch the sensing region 402 to execute a required instruction or function. In detail, the touch panel 400a includes a substrate 410, a touch control element 420a, at least one ground electrode 430a (only one ground electrode is schematically illustrated in FIG. 2A) and at least one metal wire 440a (only one metal wire is schematically illustrated in FIG. 2A). The touch control element 420a is disposed on an insulation layer 460 (referring to FIG. 1) on the substrate 410, and the touch control element 420a includes at least one sensing electrode 422 (a plurality of sensing electrodes is schematically illustrated in FIG. 2A), at least one transmission wire 424 (a plurality of transmission wires is schematically illustrated in FIG. 2A) and at least two pads 426a, where the pads 426a are a first pad 426a1 and at least one second pad 426a2 (a plurality of second pads is schematically illustrated in FIG. 2A). The sensing electrodes 422 are located in the sensing region 402, and the transmission wires 424 and the pads 426a are located in the peripheral region 404, and the transmission wires 424 are located between the sensing electrodes 422 and the second pads 426a2, and are structurally and electrically connected to the sensing electrodes 422 and the second pads 426a2. The ground electrode 430a is disposed in the peripheral region 404 of the substrate 410. The meal wire 440a is disposed in the peripheral region 404 of the substrate 410, where the metal wire 440a is connected between the ground electrode 430a and the first pad 426a1.

It should be noticed that although a plurality of sensing electrodes 422 and a plurality of transmission wires 424 are illustrated in FIG. 2A, in other embodiments that are not illustrated, a single sensing electrode 422 or a single transmission wire 424 can also be used to construct the touch control element 420a of the touch panel 400a. Namely, the numbers of the sensing electrodes 422 and the transmission wires 424 are not limited to be one or plural. Moreover, a shape of the sensing electrode 422 is not limited to that illustrated in FIG. 2A.

For example, FIG. 2B is a partial bottom enlarged view of the touch control element of the touch panel of FIG. 2A according to another embodiment. FIG. 2C is a cross-sectional view of FIG. 2B along a line I-I. Referring to FIG. 2B and FIG. 2C, the sensing electrode 422a includes a plurality of first sensing series 423a (only one first sensing series is schematically illustrated in FIG. 2B) and a plurality of second sensing series 425a (only one second sensing series is schematically illustrated in FIG. 2B). Each of the first sensing series 423a extends along a first direction D1 and includes a plurality of first sensing electrode pads 423a1 and a plurality of first bridge electrodes 423a2 electrically connecting the first sensing electrode pads 423a1. Each of the second sensing series 425a extends along a second direction D2 and includes a plurality of second sensing electrode pads 425a1 and a plurality of second bridge electrodes 425a2 electrically connecting the second sensing electrode pads 425a1. Each of the second bridge electrodes 425a2 is insulated from the corresponding first bridge electrode 423a2 through an insulation layer 427. The first direction D1 is intersected with the second direction D2, and the first sensing series 423a and the second sensing series 425a are intersected with each other. A plurality of transmission wires 424a is disposed at peripheral of the first sensing series 423a and the second sensing series 425a, and each of the transmission wires 424a is connected to one of the first sensing series 423a and the second sensing series 425a, where the transmission wires 424a can be shielded by a light shielding layer 429. It should be noticed that the ground electrode 430a (referring to FIG. 2A), the first sensing electrode pads 423a1 and the second sensing electrode pads 425a1 belong to a same film layer, i.e. the ground electrode 430a, the first sensing electrode pads 423a1 and the second sensing electrode pads 425a1 are simultaneously formed in a same fabricating process. The metal wire 440a (referring to FIG. 2A), the second bridge electrodes 425a2, and the transmission wires 424a belong to a same film layer, i.e. the metal wire 440a, the second bridge electrodes 425a2 and the transmission wires 424a are simultaneously formed in a same fabricating process. In this way, fabrication cost is effectively saved.

Moreover, in other embodiments that are not illustrated, the sensing electrodes 422 can be a whole electrode layer formed in the sensing region 402, or can be electrode series formed by a plurality of diamond, rectangular and polygonal electrodes. Certainly, the sensing electrodes 422 can also be bar-shape electrodes formed in the sensing region 402. The touch panel 400a is, for example, a capacitive touch panel, an acoustic wave touch panel, an infrared touch panel or an optical touch panel, which is not limited by the invention.

Referring to FIG. 1, the conductive element 500 is disposed between the shielding electrode layer 300 and the touch panel 400a, where the shielding electrode layer 300 is structurally and electrically connected to the metal wire 440a or the ground electrode 430a of the touch panel 400a through the conductive element 500. As shown in FIG. 1, the shielding electrode layer 300 is structurally and electrically connected to the metal wire 440a of the touch panel 400a through the conductive element 500. Here, the conductive element 500 is, for example, a silver adhesive layer or a conductive adhesive tape. The flexible circuit board 600 is disposed on the touch panel 400a, and is located in the peripheral region 404, where the flexible circuit board 600 is electrically connected to the pads 426a of the touch control element 420a, so that the sensing electrode 422 and the metal wire 440a are electrically connected to the flexible circuit board 600 (referring to FIG. 2A). Moreover, the touch display device 100 of the present embodiment further includes an adhesive glue 700 disposed between the touch panel 400a and the shielding electrode layer 300, where a pattern of the adhesive glue 700 is, for example, a closed ring shape glue, and the touch panel 400a is fixed on the display panel 400a through the adhesion glue 700.

In the touch display device 100 of the present embodiment, by configuring the shielding electrode layer 300 between the touch panel 400a and the display panel 200, the display panel 200 is coupled to the shielding electrode layer 300, so as to prevent the display panel 200 from coupling to the sensing electrode 422 in the touch panel 400a. In this way, an interference signal generated by the display panel 200 is prevented from influencing a touch signal sensed by the sensing electrode 422, so that sensing capability of the touch display device 100 is improved. Moreover, since the shielding electrode layer 300 of the present embodiment can transmit the static electricity between the touch panel 400a and the display panel 200 to the ground electrode 430a or the metal wire 440a of the touch panel 400a through the conductive element 500, and the metal wire 440a transmits the static electricity generated between the touch panel 400a and the display panel 200 to the ground through the electrical connection between the pad 426a and a ground terminal 602 of the flexible circuit board 600. In this way, not only the sensing capability of the touch display device 100 is effectively improved, but also the static electricity is effectively discharged to protect the electronic components (not shown) inside the touch display device 100.

It should be noticed that the numbers and patterns of the ground electrodes 430a and the metal wires 440a of the touch panel 400a are not limited by the invention, and in the present embodiment, the number of the ground electrode 430a is one and a shape thereof is a rectangle, and the number of the metal wire 440a is one and the metal wire 440a is only located between the ground electrode 430a and the pad 426a. A plurality of embodiments is provided below to describe touch panels 400b, 400c, 400d and 400e. It should be noticed that the referential numbers and a part of content of the aforementioned embodiment are adopted in the following embodiments, in which the same reference numbers denote the same or like components, and descriptions of the same technical contents are omitted. The aforementioned embodiment can be referred for descriptions of the omitted part, and details thereof are not repeated.

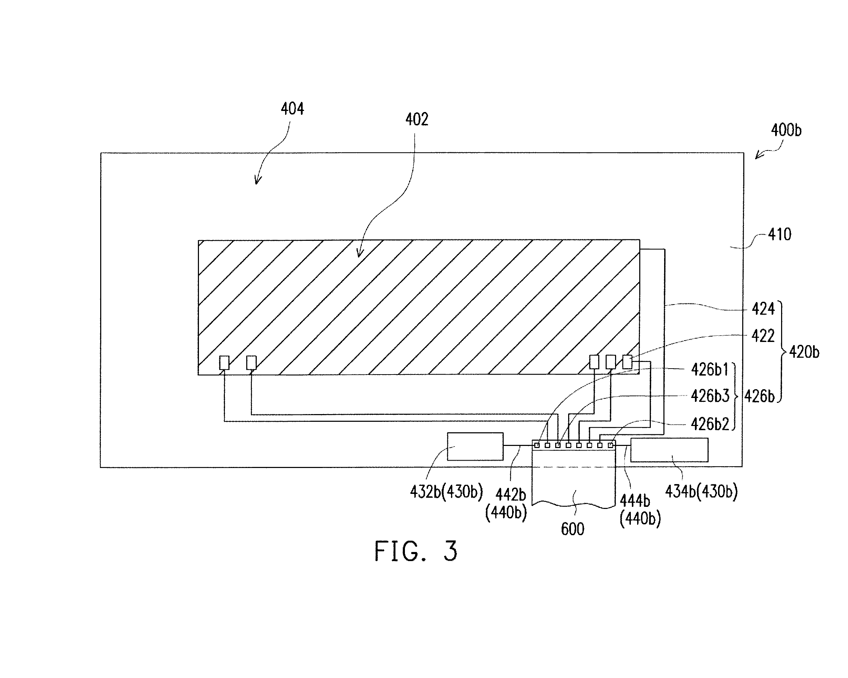

FIG. 3 is a bottom view of the touch panel and the flexible circuit board of FIG. 1 according to another embodiment. Referring to FIG. 3, the touch panel 400b of the present embodiment is similar to the touch panel 400a of FIG. 2A, and a main difference there between is that a ground electrode 430b of the touch panel 400b of the present embodiment includes a first ground electrode 432b and a second ground electrode 434b, the metal wire 440b includes a first metal wire 442b and a second metal wire 444b, and the pads 426b includes a first pad 426b1. a second pad 426b2 and at least one third pad 426b3 (a plurality of the third pad is schematically illustrated in FIG. 3) located between the first pad 426b1 and the second pad 426b2. The first metal wire 442b is electrically connected to the first ground electrode 432b and the first pad 426b1, and the second metal wire 444b is electrically connected to the second ground electrode 434b and the second pad 426b2. The transmission lines 424 of the touch control element 420b are electrically connected to the third pads 426b3.

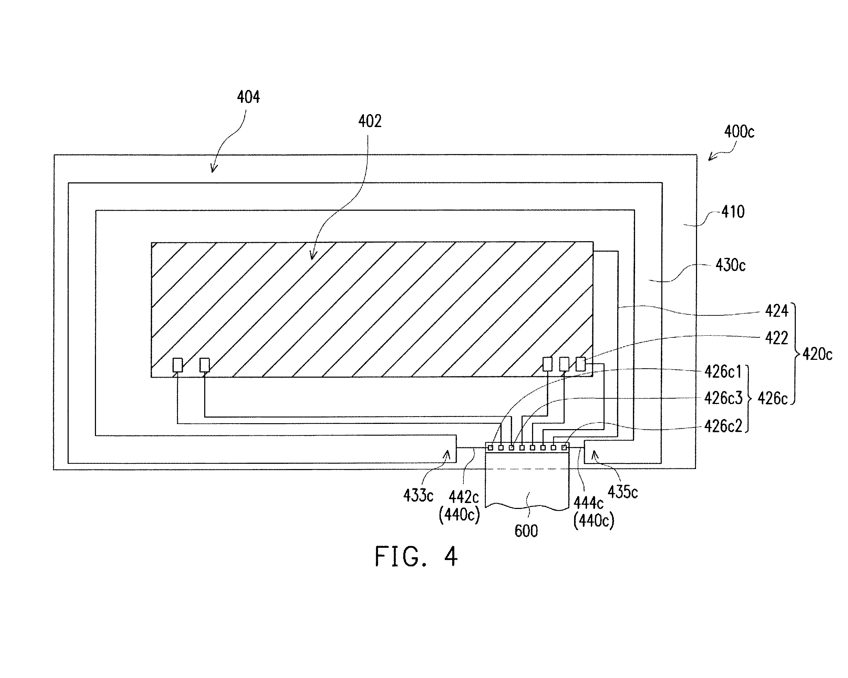

FIG. 4 is a bottom view of the touch panel and the flexible circuit board of FIG. 1 according to still another embodiment. Referring to FIG. 4, the touch panel 400c of the present embodiment is similar to the touch panel 400a of FIG. 2A, and a main difference there between is that a ground electrode 430c of the touch panel 400c of the present embodiment is a ring-shape electrode, which surrounds the sensing region 402 and has a first end 433c and a second end 435c opposite to each other. The metal wire 440c includes a first metal wire 442c and a second metal wire 444c. The pads 426c include a first pad 426c1, a second pad 426c2 and at least one third pad 426c3 (a plurality of the third pad is schematically illustrated in FIG. 4) located between the first pad 426c1 and the second pad 426c2. The first metal wire 442c is electrically connected to the first end 433c of the ring-shape ground electrode 430c and the first pad 426c1, and the second metal wire 444c is electrically connected to the second end 435c of the ring-shape ground electrode 430c and the second pad 426c2. The transmission wires 424 of the touch control element 420c are connected to the third pads 426c3.

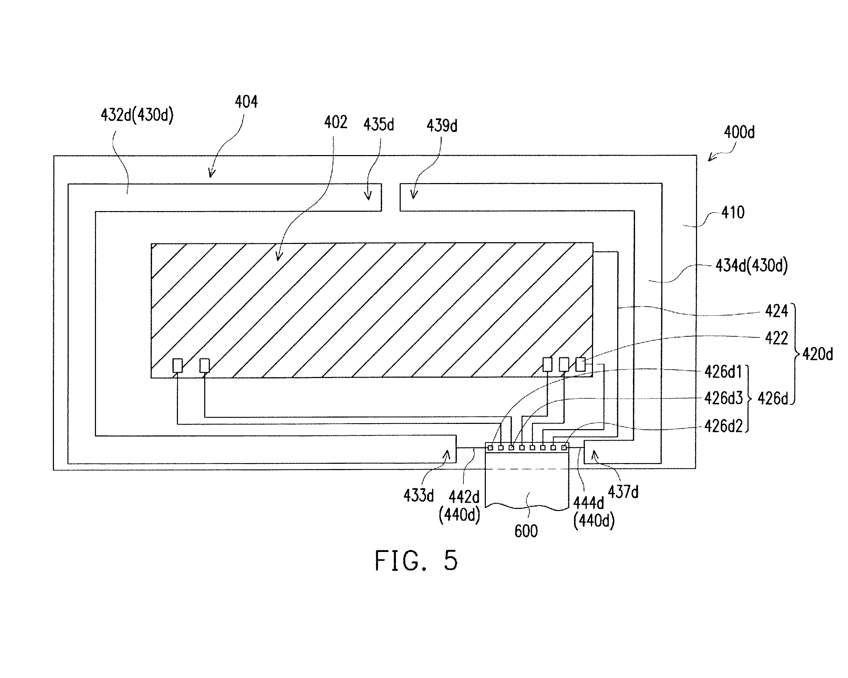

FIG. 5 is a bottom view of the touch panel and the flexible circuit board of FIG. 1 according to yet another embodiment. Referring to FIG. 5, the touch panel 400d of the present embodiment is similar to the touch panel 400a of FIG. 2A, and a main difference there between is that a ground electrode 430d of the touch panel 400d of the present embodiment includes a first type ring-shape ground electrode 432d and a second type ring-shape ground electrode 434d. The first type ring-shape ground electrode 432d and the second type ring-shape ground electrode 434d surround the sensing region 402, and the first type ring-shape ground electrode 432d has a first end 433d and a second end 435d opposite to each other, and the second type ring-shape ground electrode 434d has a third end 437d and a fourth end 439d opposite to each other. The metal wire 440d includes a first metal wire 442d and a second metal wire 444d. The pads 426d include a first pad 426d1, a second pad 426d2 and at least one third pad 426d3 (a plurality of the third pad is schematically illustrated in FIG. 5) located between the first pad 426d1 and the second pad 426d2. The first metal wire 442d is electrically connected to the first end 433d of the first type ring-shape ground electrode 432d and the first pad 426d1, and the second metal wire 444d is electrically connected to the third end 437d of the second type ring-shape ground electrode 434d and the second pad 426d2. The second end 435d of the first type ring-shape ground electrode 432d is adjacent to the fourth end 439d of the second type ring-shape ground electrode 434d. The transmission wires 424 of the touch control element 420d are connected to the third pads 426d3.

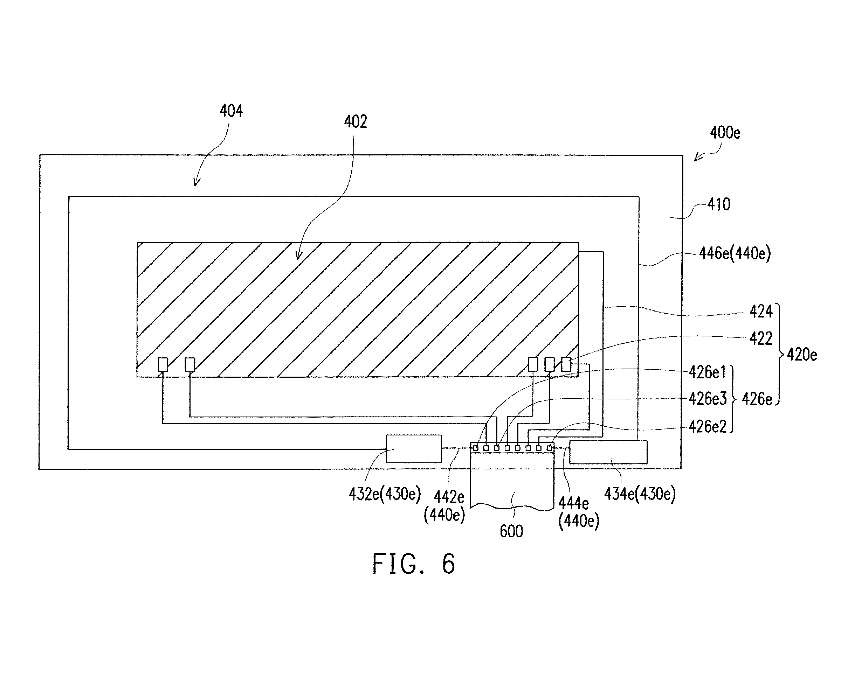

FIG. 6 is a bottom view of the touch panel and the flexible circuit board of FIG. 1 according to still another embodiment. Referring to FIG. 6, the touch panel 400e of the present embodiment is similar to the touch panel 400a of FIG. 2A, and a main difference there between is that a ground electrode 430e of the touch panel 400e of the present embodiment includes a first ground electrode 432e and a second ground electrode 434e. The metal wire 440e includes a first metal wire 442e, a second metal wire 444e and a third metal wire 446e. The pads 426e include a first pad 426e1, a second pad 426e2 and at least one third pad 426e3 (a plurality of the third pad is schematically illustrated in FIG. 6) located between the first pad 426e1 and the second pad 426e2. The first metal wire 442e is electrically connected to the first ground electrode 432e and the first pad 426e1, and the second metal wire 444e is electrically connected to the second ground electrode 434e and the second pad 426e2. The third metal wire 446e is electrically connected to the first ground electrode 432e and the second ground electrode 434e and surrounds the sensing region 404. The transmission wires 424 of the touch control element 420e are connected to the third pads 426e3.

In summary, the shielding electrode layer is disposed between the touch panel and the display panel, which may mitigate signal interference between the touch panel and the display panel. Moreover, the shielding electrode layer can transmit the static electricity between the touch panel and the display panel to the ground electrode or the metal wire of the touch panel through the conductive element, and the metal wire transmits the static electricity generated between the touch panel and the display panel to the ground through the electrical connection between the pad and the ground terminal of the flexible circuit board. In this way, not only sensing capability of the touch display device is effectively improved, but also the static electricity is effectively discharged to protect the electronic components inside the touch display device.

## Claims

1. A touch display device ( 100 ), comprising:
a display panel ( 200 ) , having a top surface ( 202 ) ;
a shielding electrode layer ( 300 ) , disposed on the display panel ( 200 ) , and covering the top surface ( 202 ) ;
a touch panel ( 400a, 400b, 400c, 400d, 400e ) , disposed on the shielding electrode layer ( 300 ), and having a sensing region ( 402 ) and a peripheral region ( 404 ) surrounding the sensing region ( 402 ) , and the touch panel ( 400a, 400b, 400c, 400d, 400e ) comprising:
a substrate ( 410 ) ;
a touch control element ( 420a, 420b, 420c, 420d, 420e ), disposed on the substrate ( 410 ) , and the touch control element ( 420a, 420b, 420c, 420d, 420e ) comprising at least one sensing electrode ( 422, 422a ) , at least one transmission wire ( 424, 424a ) and at least two pads ( 426a, 426b, 426c, 426d, 426e ) , wherein the sensing electrode ( 422, 422a ) is located in the sensing region ( 402 ), the transmission wire ( 424, 424a ) and the pads ( 426a, 426b, 426c, 426d, 426e ) are located in the peripheral region ( 404 ), and the transmission wire ( 424, 424a ) is located between the sensing electrode ( 422, 422a ) and one of the pads ( 426a, 426b, 426c, 426d, 426e ) , and is electrically connected to the sensing electrode ( 422, 422a ) and one of the pads ( 426a, 426b, 426c, 426d, 426e ) ;
at least one ground electrode ( 430a, 430b, 430c, 430d, 430e ), disposed in the peripheral region ( 404 ) of the substrate ( 410 ); and
at least one metal wire ( 440a, 440b, 440c, 440d, 440e ), disposed in the peripheral region ( 404 ) of the substrate ( 410 ) , wherein the metal wire ( 440a, 440b, 440c, 440d, 440e ) is connected between the ground electrode ( 430a, 430b, 430c, 430d, 430e ) and another one of the pads ( 426a, 426b, 426c, 426d, 426e ) ;
a conductive element ( 500 ), disposed between the shielding electrode layer ( 300 ) and the touch panel ( 400a, 400b, 400c, 400d, 400e ), wherein the shielding electrode layer ( 300 ) is electrically connected to the metal wire ( 440a, 440b, 440c, 440d, 440e ) or the ground electrode ( 430a, 430b, 430c, 430d, 430e ) of the touch panel ( 400a, 400b, 400c, 400d, 400e ) through the conductive element ( 500 ); and
a flexible circuit board ( 600 ) , disposed on the touch panel ( 400a, 400b, 400c, 400d, 400e ), and located in the peripheral region ( 404 ), wherein the flexible circuit board ( 600 ) is electrically connected to the pads ( 426a, 426b, 426c, 426d, 426e ), so that the sensing electrode ( 422, 422a ) and the metal wire ( 440a, 440b, 440c, 440d, 440e ) are electrically connected to the flexible circuit board ( 600 ).

2. The touch display device ( 100 ) as claimed in claim 1, wherein the at least one ground electrode ( 430b ) comprises a first ground electrode ( 432b ) and a second ground electrode ( 434b ), the at least one metal wire ( 440b ) comprises a first metal wire ( 442b ) and a second metal wire ( 444b ), the at least two pads ( 426b ) comprise a first pad ( 426b1 ) , a second pad and ( 426b2 ) at least one third pad ( 426b3 ) located between the first pad ( 426b1 ) and the second pad ( 426b2 ) , the first metal wire ( 442b ) is electrically connected to the first ground electrode ( 432b ) and the first pad ( 426b1 ), and the second metal wire ( 444b ) is electrically connected to the second ground electrode ( 434b ) and the second pad ( 426b2 ) , and the transmission wire ( 424 ) is connected to the third pad ( 426b3 ).

3. The touch display device ( 100 ) as claimed in claim 1, wherein the ground electrode ( 430c ) is a ring-shape ground electrode surrounding the sensing region ( 402 ) and having a first end ( 433c ) and a second end (435c) opposite to each other, the at least one metal wire ( 440c ) comprises a first metal wire ( 442c ) and a second metal wire ( 444c ), the at least two pads ( 426c ) comprise a first pad ( 426c1 ), a second pad ( 426c2 ) and at least one third pad ( 426c3 ) located between the first pad ( 426c1 ) and the second pad ( 426c2 ), the first metal wire ( 442c ) is electrically connected to the first end ( 433c ) of the ring-shape ground electrode ( 430c ) and the first pad ( 426c1 ), and the second metal wire ( 444c ) is electrically connected to the second end ( 435c ) of the ring-shape ground electrode ( 430c ) and the second pad ( 426c2 ) , and the transmission wire ( 424 ) is connected to the third pad ( 426c3 ).

4. The touch display device ( 100 ) as claimed in claim 1, wherein the at least one ground electrode ( 430d ) comprises a first type ring-shape ground electrode ( 432d ) and a second type ring-shape ground electrode ( 434d ) , the first type ring-shape ground electrode ( 432d ) and the second type ring-shape ground electrode ( 434d ) surround the sensing region ( 402 ) , and the first type ring-shape ground electrode ( 432d ) has a first end ( 433d ) and a second end ( 435d ) opposite to each other, and the second type ring-shape ground electrode ( 434d ) has a third end ( 437d ) and a fourth end ( 439d ) opposite to each other, the at least one metal wire ( 440d ) comprises a first metal wire ( 442d ) and a second metal wire ( 444d ), the at least two pads ( 426d ) comprise a first pad ( 426d1 ), a second pad and ( 426d2 ) at least one third pad ( 426d3 ) located between the first pad ( 426d1 ) and the second pad ( 426d2 ) , the first metal wire ( 442d ) is electrically connected to the first end ( 433d ) of the first type ring-shape ground electrode ( 432d ) and the first pad ( 426d1 ), the second metal wire ( 444d ) is electrically connected to the third end ( 437d ) of the second type ring-shape ground electrode ( 434d ) and the second pad ( 426d2 ), the second end ( 435d ) of the first type ring-shape ground electrode ( 432d ) is adjacent to the fourth end ( 439d ) of the second type ring-shape ground electrode ( 434d ), and the transmission wire ( 424 ) is connected to the third pad ( 426d3 ).

5. The touch display device ( 100 ) as claimed in claim 1, wherein the at least one ground electrode ( 430e ) comprises a first ground electrode ( 432e ) and a second ground electrode ( 434e ), the at least one metal wire ( 440e ) comprises a first metal wire ( 442e ), a second metal wire ( 444e ) and a third metal wire ( 446e ), the at least two pads ( 426e ) comprise a first pad ( 426e1 ), a second pad ( 426e2 ) and at least one third pad ( 426e3 ) located between the first pad ( 426e1 ) and the second pad ( 426e2 ), the first metal wire ( 442e ) is electrically connected to the first ground electrode ( 432e ) and the first pad ( 426e1 ), the second metal wire ( 444e ) is electrically connected to the second ground electrode ( 434e ) and the second pad ( 426e2 ) , the third metal wire ( 446e ) is electrically connected to the first ground electrode ( 432e ) and the second ground electrode ( 434e ) and surrounds the sensing region ( 404 ) , and the transmission wire ( 424 ) is connected to the third pad ( 426e3 ).

6. The touch display device ( 100 ) as claimed in claim 1, wherein the at least one sensing electrode ( 422a ) comprises a plurality of first sensing series ( 423a ) and a plurality of second sensing series ( 425a ) , each of the first sensing series ( 423a ) extends along a first direction ( D1 ) and comprises a plurality of first sensing electrode pads ( 423a1 ) and a plurality of first bridge electrodes ( 423a2 ) electrically connecting the first sensing electrode pads ( 423a1 ), each of the second sensing series ( 425a ) extends along a second direction ( D2 ) and comprises a plurality of second sensing electrode pads ( 425a1 ) and a plurality of second bridge electrodes ( 425a2 ) electrically connecting the second sensing electrode pads ( 425a1 ), each of the second bridge electrodes ( 425a2 ) is insulated from the corresponding first bridge electrode ( 423a2 ) through an insulation layer ( 427 ), the first direction ( D1 ) is intersected with the second direction ( D2 ) , and the first sensing series ( 423a ) and the second sensing series ( 425a ) are intersected with each other, the at least one transmission wire ( 424a ) comprises a plurality of transmission wires disposed at peripheral of the first sensing series ( 423a ) and the second sensing series ( 425a ) , and each of the transmission wires ( 424a ) is connected to one of the first sensing series ( 423a ) and the second sensing series ( 425a ).

7. The touch display device ( 100 ) as claimed in claim 6, wherein the first sensing electrode pads ( 423a1 ), the second sensing electrode pads ( 425a1 ) and the ground electrode ( 430a ) belong to a same film layer, and the second bridge electrodes ( 425a2 ) , the transmission wires ( 424a ) and the metal wire ( 440a ) belong to a same film layer.

8. The touch display device ( 100 ) as claimed in claim 1, further comprising an adhesive glue ( 700 ) disposed between the touch panel ( 400a, 400b, 400c, 400d, 400e ) and the shielding electrode layer ( 300 ), wherein the touch panel ( 400a, 400b, 400c, 400d, 400e ) is fixed on the display panel ( 200 ) through the adhesive glue ( 700 ).

9. The touch display device ( 100 ) as claimed in claim 1, wherein the display panel ( 200 ) comprises a transmissive display panel, a trans-reflective display panel, a reflective display panel, a vertical alignment (VA) display panel, an in plane switch (IPS) display panel, a multi-domain vertical alignment (MVA) display panel, a twist nematic (TN) display panel, a fringe field switching (FFS) display panel or an organic light-emitting diode (OLED) display panel.

10. The touch display device ( 100 ) as claimed in claim 1, wherein the touch panel ( 400a, 400b, 400c, 400d, 400e ) comprises a capacitive touch panel, an acoustic wave touch panel, an infrared touch panel or an optical touch panel.
